# EUROPEAN PATENT APPLICATION

(11) **EP 4 707 058 A1**
(43) Date of publication of application: **11.03.2026**
(21) Application number: 24797303.5
(22) Date of filing: 04.04.2024
(51) Int. Cl.: B60L 53/38, B60L 53/30, H02J 50/90, H02J 50/80

(54) **VEHICLE WIRELESS CHARGING DEVICE**

(30) Priority: 25.04.2023 KR 20230054366
(71) Applicant: LG INNOTEK CO. LTD, Gangseo-gu Seoul 07796 (KR)
(72) Inventor: LEEM, Sung Hyun, Seoul 07796 (KR)
(74) Representative: Plasseraud IP
(86) International application number: PCT/KR2024/004455
(87) International publication number: WO 2024/225646

(57) **Abstract**

A vehicle wireless charging device, according to one embodiment of the present invention, comprises: a wireless charging unit comprising a first coil in order to charge a battery of a vehicle; a human body detection sensor for detecting a human body near the vehicle; a control unit for controlling the operation of the wireless charging unit on the basis of information related to the distance to the human body, detected by the detection sensor, and a communication unit for communicating with electric vehicle supply equipment(EVSE), wherein the control unit checks the calibration of the first coil of the wireless charging unit and a second coil of a charging pad, and then receives the information related to the distance to the human body, detected by the human body detection sensor.

## Description

### [Technical Field]

The teachings in accordance with exemplary and non-limiting embodiments of the present invention relate generally to a vehicle wireless charging device.

### [Background Arts]

Electric vehicles (EVs) or plug-in hybrid electric vehicles (PHEVs), such as environmentally friendly vehicles, utilize electric vehicle supply equipment (EVSE) installed at charging stations for battery charging.

Numerous protocols are being actively established to facilitate interaction between electric vehicles and EVSE. Protocols concerning electric vehicle charging can broadly be categorized into charging systems, charging interfaces, and communication protocols.

However, as different protocols are adopted by different countries or automotive companies, the charging apparatus, battery pack, and Battery Management System (BMS) of electric vehicles must be developed and designed according to each specific protocol.

### [Detailed Description of the Invention]

### [Technical Subject]

The technical subject that the present invention seeks to solve is to provide a vehicle wireless charging device.

### [Technical Solution]

In order to solve the abovementioned technical subject, a vehicle wireless charging device, according to one embodiment of the present invention, may comprise: a wireless charging unit comprising a first coil in order to charge a battery of a vehicle; a human body detection sensor for detecting a human body near the vehicle; a control unit for controlling the operation of the wireless charging unit on the basis of information related to the distance to the human body, detected by the detection sensor, and a communication unit for communicating with electric vehicle supply equipment(EVSE), wherein the control unit checks the calibration of the first coil of the wireless charging unit and a second coil of a charging pad, and then receives the information related to the distance to the human body, detected by the human body detection sensor.

Preferably but not necessarily, the control unit may reduce the magnetic flux density of the EVSE's second coil via the communication unit as the distance to the human body decreases, and conversely, the control unit may increase the magnetic flux density of the EVSE's second coil via the communication unit as the distance to the human body increases.

Preferably but not necessarily, when the human body detection sensor detects multiple human bodies separated (spaced apart) from one another, the control unit may control the operation of the wireless charging unit based on the distance to the human body closest to the wireless charging unit.

Preferably but not necessarily, the control unit may verify an overlap ratio within the first range where the first coil and the second coil can be charged, and the control unit may control the operation of the wireless charging unit based on the overlap ratio and information regarding the distance to the human body.

Preferably but not necessarily, the vehicle wireless charging device may further comprise a mobile terminal detection sensor for detecting mobile devices around the vehicle, wherein, following calibration verification of the first coil of the wireless charging unit and the second coil of the charging pad, the control unit can receive information regarding the distance to the mobile device and thereby control the operation of the wireless charging unit.

Preferably but not necessarily, the control unit may reduce the magnetic flux density of the second coil of the EVSE via the communication unit as the distance to the mobile terminal decreases, and the control unit may increase the magnetic flux density of the second coil of the EVSE via the communication unit as the distance to the mobile terminal increases.

Preferably but not necessarily, when the human body detection sensor detects multiple human bodies separated from one another, the control unit may control the operation of the wireless charging unit based on the distance to the human body closest to the wireless charging unit.

Preferably but not necessarily, the control unit may store a lookup table relating to at least one of the distance to the human body detected by the human body detection sensor and the distance to the mobile terminal detected by the mobile terminal detection sensor, and the magnitude of the charging power of the wireless charging unit.

### [Advantageous Effects]

According to these embodiments, by detecting human bodies and mobile terminals located around the vehicle during wireless charging operation and adjusting the vehicle's wireless charging power accordingly, the impact on human bodies can be minimized and malfunctions caused by mobile terminals can be prevented.

### [Brief Descriptions of Drawings]

FIG. 1 illustrates a vehicle wireless charging device according to one embodiment of the present invention.
FIG. 2 is a block diagram of the vehicle wireless charging device according to one embodiment of the present invention.
FIG. 3 is a block diagram of a vehicle wireless charging device according to another embodiment of the present invention.
FIG. 4 is a diagram illustrating the first range within which the first coil and second coil of the vehicle wireless charging device according to one embodiment of the present invention can charge.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

In addition, the terms used in the embodiments of the present invention are intended to explain the embodiments and are not intended to limit the invention. In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

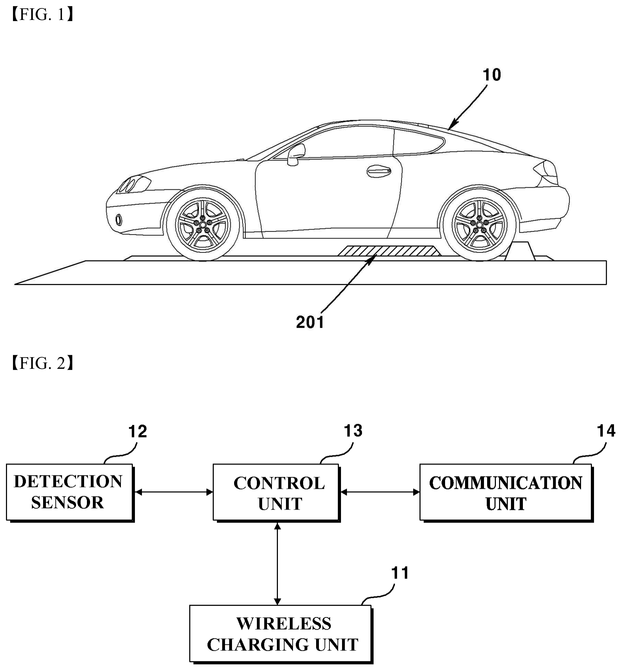

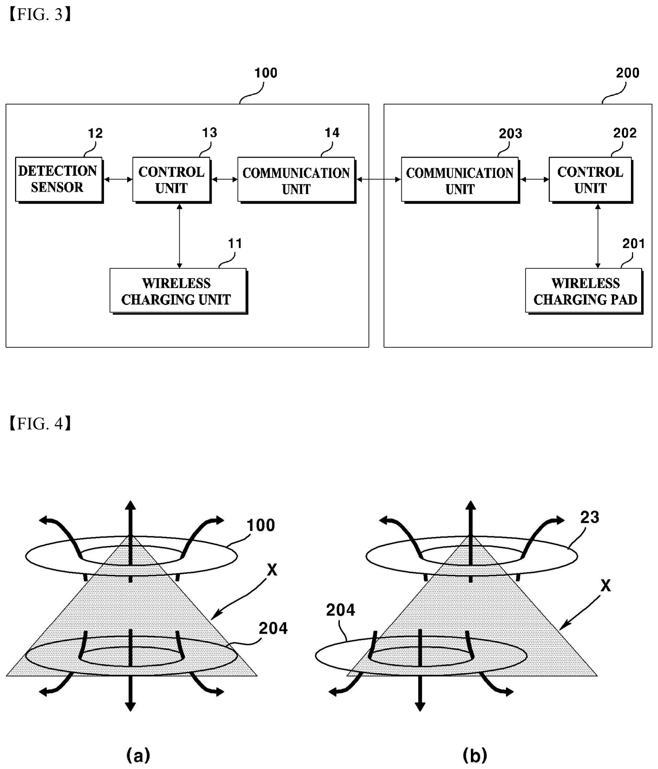

FIG. 1 illustrates a vehicle wireless charging device according to one embodiment of the present invention, FIG. 2 is a block diagram of the vehicle wireless charging device according to one embodiment of the present invention, FIG. 3 is a block diagram of a vehicle wireless charging device according to another embodiment of the present invention, and FIG. 4 is a diagram illustrating the first range within which the first coil and second coil of the vehicle wireless charging device according to one embodiment of the present invention can charge.

A charging system including an electric vehicle according to the present embodiment may include a vehicle (10) and an EVSE (Electric Vehicle Supply Equipment, 200). The vehicle (10) is an electric vehicle (EV) and may be charged from the EVSE (200). The EVSE (200) is equipment supplying AC or DC and may be deployed at a charging station or within a household. The EVSE (200) is not limited to a fixed location and may be implemented as portable.

In this specification, the EVSE (200) may be used interchangeably with terms such as charging station (Supply), AC charging station (AC supply), DC charging station (DC supply), and socket-outlet. The EVCC (Electric Vehicle Communication Controller) is a component included within the vehicle (10) and may be connected to the ECU (Electronic Control Unit) within the vehicle (10). The EVCC may perform charging signal and charging power control within the vehicle.

The vehicle wireless charging device (100) according to the embodiment may comprise a wireless charging unit (11), a detection sensor (12), a control unit (13), and a communication unit (14).

The wireless charging unit (11) may include a first coil (15) for charging the vehicle's (10) battery. The first coil (15), disposed to face the second coil (204) of an EVSE's (200) wireless charging pad (201), can receive alternating current power from the magnetic field changes induced by the second coil (204). The second coil (204) may receive power from an external source to induce a current in the first coil (15). The vehicle's (10) battery can be charged via a wireless charging method utilizing a magnetic field through the first coil (15) and second coil (204). The wireless charging unit (11) can perform power conversion operations to charge the battery with the power received by the first coil (15), depending on the magnitude of the power transmitted from the second coil (204). The current value flowing through the second coil (204) can be adjusted according to a current command transmitted from the control unit (202) of the EVSE (200) or the control unit (13) of the vehicle wireless charging device (100). Here, the first coil (15) may be referred to as the receiving coil (Rx Coil), and the second coil (204) may be referred to as the transmitting coil (Tx Coil).

The detection sensor (12) may be at least one of a human body detection sensor and a mobile terminal detection sensor. The human body detection sensor can detect human bodies around the vehicle. The human body detection sensor can detect human bodies around the vehicle and detect the distance from the human body detection sensor to the human body. The human body detection sensor may include at least one of a motion sensor, an infrared sensor, an ultrasonic sensor, and a radar. The human body detection sensor may be disposed on the exterior surface of the vehicle (10). The human body detection sensor may be disposed at least one of the front, rear, and sides of the vehicle.

When detecting multiple human bodies separated from each other by the human body detection sensor, the control unit (13) can control the operation of the wireless charging unit (11) according to the distance to the human body closest to the wireless charging unit (11). The control unit (13) may control the magnetic flux density of the second coil (204) of the EVSE (200) via the communication unit (14) based on the distance to the human body closest to the vehicle (10).

The control unit (13) may receive information regarding the distance to the human body detected by the human body detection sensor and control the wireless charging unit (11). The control unit (13) can calculate the distance from the wireless charging unit (11) to the human body, considering the location where the human body detection sensor is disposed and the distance from the human body detection sensor to the first coil (15) of the wireless charging unit (11). The control unit (13) can adjust the wireless charging power according to the distance from the wireless charging unit (11) to the human body. The control unit (13) can transmit a signal to the EVSE (200) via the communication unit (14) to adjust the wireless charging power according to the distance from the wireless charging unit (11) to the human body. The control unit (13) can reduce the magnetic flux density of the second coil (204) of the EVSE (200) via the communication unit (14) as the distance to the human body decreases. The control unit (13) can increase the magnetic flux density of the second coil (204) of the EVSE (200) via the communication unit (14) as the distance to the human body increases. This minimizes the impact of the magnetic field on the human body during vehicle wireless charging.

The mobile terminal detection sensor can detect mobile terminals around the vehicle. The mobile terminal detection sensor can detect mobile terminals around the vehicle and detect the distance from the mobile terminal detection sensor to the mobile terminal. The mobile terminal detection sensor may include at least one of a GPS sensor, an ultrasonic sensor, and a radar. The mobile terminal detection sensor may be disposed on the exterior and interior of the vehicle (10). The mobile terminal detection sensor may be disposed at least one of the front, rear, and sides of the vehicle.

When the mobile terminal detection sensor detects a plurality of mobile terminals spaced apart from each other, the control unit (13) may control the operation of the wireless charging unit (11) based on the distance to the mobile terminal closest to the wireless charging unit (11). The control unit (13) may control the magnetic flux density of the second coil (204) of the EVSE (200) via the communication unit (14) based on the distance to the mobile terminal closest to the vehicle (10).

The control unit (13) may receive information regarding the distance from the mobile terminal detection sensor to the detected mobile terminal and thereby control the wireless charging unit (11). The control unit (13) can calculate the distance from the wireless charging unit (11) to the mobile terminal, considering the position where the mobile terminal detection sensor is disposed and the distance from the mobile terminal detection sensor to the first coil (15) of the wireless charging unit (11). The control unit (13) can adjust the wireless charging power according to the distance from the wireless charging unit (11) to the mobile terminal. The control unit (13) can transmit a signal to the EVSE (200) via the communication unit (14) to adjust the wireless charging power according to the distance from the wireless charging unit (11) to the mobile terminal. The control unit (13) can reduce the magnetic flux density of the second coil (204) of the EVSE (200) via the communication unit (14) as the distance to the mobile terminal decreases. The control unit (13) can increase the magnetic flux density of the second coil (204) of the EVSE (200) via the communication unit (14) as the distance to the mobile terminal increases. This minimizes the influence of the magnetic field on the vehicle wireless charging.

The control unit (13) may regulate (adjust) the wireless charging power according to a pre-set priority between the human body and the mobile terminal. The control unit (13) may regulate the wireless charging power based on the object closest to the vehicle among the human body and the mobile terminal. The control unit (13) may refrain from regulating the wireless charging power if the human body and the mobile terminal are not within a harmful range of the wireless charging magnetic field.

The control signal generated by the control unit (13) may be transmitted to the communication unit (203) of the EVSE (200) via wireless communication of the communication unit (14). The control signal generated by the control unit (13) may be transmitted to the communication unit (203) of the EVSE (200) via wired communication of the communication unit (14). The EVSE (200) may receive the control signal generated by the control unit (13) and regulate the power applied to the second coil (204). The EVSE (200) may receive the control signal generated by the control unit (13) and regulate the magnetic flux density of the second coil (204).

The control unit (13) may receive information regarding the distance to a human body detected by the human body detection sensor after confirming the calibration of the first coil (15) of the wireless charging unit (11) and the second coil (204) of the wireless charging pad (201). The control unit (13) may determine whether to initiate wireless charging operation based on the degree of calibration between the first coil (15) of the wireless charging unit (11) and the second coil (204) of the wireless charging pad (201).

For example, if the overlap ratio between the first coil (15) of the wireless charging unit (11) and the second coil (204) of the wireless charging pad (201) satisfies the first range (area X in FIG. 4), it may be judged that charging is possible. The control unit (13) can determine the overlap ratio by comparing information regarding the power transmitted from the second coil (204) of the EVSE (200) with information regarding the power received by the first coil (15). For example, if the power transmitted to the second coil (204) of the EVSE (200) is 100% and the power received by the first coil (15) is 50%, the overlap ratio between the first coil (15) and the second coil (204) can be confirmed as 50%.

The control unit (13) can control the operation of the wireless charging unit (11) based on information regarding the overlap ratio between the first coil (15) of the wireless charging unit (11) and the second coil (204) of the wireless charging pad (201), and the distance to the human body. The control unit (13) may transmit a control signal to the EVSE (200) to regulate the wireless charging power based on information regarding the overlap ratio between the first coil (15) of the wireless charging unit (11) and the second coil (204) of the wireless charging pad (201), and the distance to the human body. The control unit (13) may initiate charging when the overlap ratio between the first coil (15) of the wireless charging unit (11) and the second coil (204) of the wireless charging pad (201) is at or above a predetermined value. It may transmit a signal to the EVSE (200) to regulate the wireless charging power according to the distance to the human body and control the operation of the wireless charging unit (11).

The control unit (13) may store a lookup table relating to at least one of the distance to the human body detected by the human body detection sensor and the distance to the mobile terminal detected by the mobile terminal detection sensor, and the magnitude of the charging power of the wireless charging unit (11). For example, a lookup table may be stored where the distance to the detected human body from the human body detection sensor is matched with the magnitude of the charging power of the wireless charging unit (11). A lookup table may be stored that matches the distance detected by the mobile terminal detection sensor to the mobile terminal with the magnitude of the charging power of the wireless charging unit (11). This enables the wireless charging power to be adjusted immediately after detecting the distance to a human body and the distance to a mobile terminal in the vicinity of the vehicle.

A person skilled in the art relating to the present embodiments will understand that the disclosed methods may be implemented in modified forms without departing from the essential characteristics of the above description. Therefore, the disclosed methods should be considered from an illustrative perspective rather than a restrictive one. The scope of the present invention is defined not by the foregoing description but by the appended claims, and all differences within the scope of the claims shall be interpreted as falling within the scope of the present invention.

## Claims

1. A vehicle wireless charging device, comprising: a wireless charging unit comprising a first coil in order to charge a battery of a vehicle; a human body detection sensor for detecting a human body near the vehicle; a control unit for controlling the operation of the wireless charging unit on the basis of information related to the distance to the human body, detected by the detection sensor, and a communication unit for communicating with electric vehicle supply equipment(EVSE), wherein the control unit checks the calibration of the first coil of the wireless charging unit and a second coil of a wireless charging pad, and then receives the information related to the distance to the human body, detected by the human body detection sensor.

2. The vehicle wireless charging device of claim 1, wherein the control unit reduces the magnetic flux density of the EVSE's second coil via the communication unit as the distance to the human body decreases, and conversely, the control unit increases the magnetic flux density of the EVSE's second coil via the communication unit as the distance to the human body increases.

3. The vehicle wireless charging device of claim 1, wherein when the human body detection sensor detects multiple human bodies separated (spaced apart) from one another, the control unit controls the operation of the wireless charging unit based on the distance to the human body closest to the wireless charging unit.

4. The vehicle wireless charging device of claim 1, wherein the control unit verifies an overlap ratio within the first range where the first coil and the second coil can be charged, and the control unit controls the operation of the wireless charging unit based on the overlap ratio and information regarding the distance to the human body.

5. The vehicle wireless charging device of claim 1, further comprising a mobile terminal detection sensor for detecting mobile devices around the vehicle, wherein, following calibration verification of the first coil of the wireless charging unit and the second coil of the charging pad, the control unit receives information regarding the distance to the mobile device and thereby controls the operation of the wireless charging unit.

6. The vehicle wireless charging device of claim 5, wherein the control unit reduces the magnetic flux density of the second coil of the EVSE via the communication unit as the distance to the mobile terminal decreases, and the control unit increases the magnetic flux density of the second coil of the EVSE via the communication unit as the distance to the mobile terminal increases.

7. The vehicle wireless charging device of claim 5, wherein when the human body detection sensor detects multiple human bodies separated from one another, the control unit controls the operation of the wireless charging unit based on the distance to the human body closest to the wireless charging unit.

8. The vehicle wireless charging device of claim 5, wherein the control unit stores a lookup table relating to at least one of the distance to the human body detected by the human body detection sensor and the distance to the mobile terminal detected by the mobile terminal detection sensor, and the magnitude of the charging power of the wireless charging unit.
